# EUROPEAN PATENT APPLICATION

(11) **EP 3 034 421 A1**
(43) Date of publication of application: **22.06.2016**
(21) Application number: 14198077.1
(22) Date of filing: 15.12.2014
(51) Int. Cl.: B65C 9/00, B65G 29/00, B67B 3/00, B67C 3/22

(54) **Carousel for an article-handling machine and relative method of driving in rotation**

(71) Applicant: SIDEL PARTICIPATIONS, S.A.S., 76930 Octeville-sur-Mer (FR)
(72) Inventor: Cero, Vincenzo, 43126 PARMA (IT); Dadomo, Matteo, 43126 Parma (IT)
(74) Representative: Di Sciuva, Michele

(57) **Abstract**

There is described a carousel (1) for an article-handling machine (2), comprising: a stator (3); a rotor (4) rotatable with respect to said stator (3) in a first direction and adapted to be operatively connected to a plurality of operative heads for carrying out an operation on respective articles; and a first motor (10), which is operatively connected to said rotor (4) and is controllable for exerting a first torque (Cm) on said rotor (4) a first torque (Cm); carousel (1) further comprises a second motor (20), which is drivable independently of first motor (10), is operatively connected to rotor (4) and is controllable for exerting on rotor (4) a second torque (Cf).

## Description

The present invention relates to a carousel for an article-handling machine and to a method for driving a carousel of an article-handling machine.

In particular, the article-handling machine is adapted to carry out an operation on articles filled with a product, in particular a food product.

The article-handling machine is furthermore adapted to be incorporated in a plant for manufacturing the articles.

Plants are known comprising substantially:
- a blowing station, in which a hot air flow is blown inside a plurality of preforms so as to form corresponding empty articles;
- a filling station, in which the empty articles are filled with the pourable product; and
- a capping station, in which a closing device is applied above to each article.

In particular, each of the above said article-handling machine comprises a carousel rotatable about an axis.

The carousel of each of the above said stations comprises substantially:
- a stator, which is fixed about the axis; and
- a rotor, which is rotatable about the axis with respect to the stator.

In detail, the rotor comprises a plurality of transfer elements adapted to convey the articles (or the preforms) along a path having the shape of an arc of circumference, which extends about this axis between an inlet station and an outlet station; and
- a plurality of operative units associated to respective transfer elements and adapted to perform a blowing, filing and capping operation on respective containers (or preforms) moving along the path having the shape of an arc of circumference.

The carousel further comprises a first motor which is operatively connected to the rotor and is adapted to drive in rotation the rotor about the first axis.

In detail, the first motor drives in rotation a first pinion which meshes with an inner gear integral with the rotor.

The meshing of the first pinion and the inner gear of the carousel inevitably generates mechanical gaps between the first teeth of the first pinion and the relative vanes between the second teeth meshing with the first teeth.

These mechanically gaps inevitably reduce the precision and the repeatibility of the rotation of the rotor, especially when the rotor is accelerated or decelerated.

This problem is especially felt in case of larger-size carousel. As a matter of fact, in that case, the width of the vanes between the second teeth and, therefore, of the mechanical gaps are particularly relevant.

In order to solve this problem, it has been proposed to use a further pinion, which is operatively connected to the first pinion by means of a belt and comprises, in turn, third teeth which mesh with relative first teeth of the inner gear of the rotor.

The further pinion rotates in the same direction with respect to the first pinion and exerts, therefore, a braking torque on the rotor.

The Applicant has found that due to the inevitable wearing effects acting on the belt, the proposed solution is not suitable for reducing the mechanical gaps in a repeatable, precise and reliable way.

Furthermore, the proposed solution is particular costly.

The Applicant has also found that the above-described solution inevitably results in a rigid control of the movement of the rotor of the carousel.

As a matter of fact, the first pinion can only be operated to accelerate the carousel as well as the further pinion can only be operated to brake the rotor of the carousel.

Accordingly, this rigid control is not optimal, when a fast acceleration or deceleration of the carousel is required by the operative conditions.

Moreover, the known solution is particularly rigid as regards the value of the braking torque, which is exerted by the further pinion on the rotor of the carousel.

As a matter of fact, this braking torque is determined by the radius and the number of the first teeth and the third teeth of the first pinion and the further pinion respectively.

Being the braking torque so rigidly determined by the geometrical/mechanical parameters of the first pinion and the further pinion, it is not possible to ensure that at least one first tooth of the first pinion and at least one third tooth of the further pinion simultaneously mesh with a corresponding third tooth of the inner gear of the rotor.

Therefore, it not possible to ensure a smooth, precise and repeatable movement of the rotor in any operative condition.

It is an object of the present invention to provide a carousel for an article-handling machine, which allows to easily and cost-effectively overcome at least one of drawbacks connected to the known and previously described solution.

The aforementioned object is achieved by the present invention as it relates to a carousel for an article-handling machine, as defined in claim 1.

The present invention also relates to a method for driving a carousel for an article-handling machine, as defined in claim 12.

In the following one preferred, non-limiting embodiment of the present invention will be described by way of example with reference to the accompanying drawings, in which:
Figure 1 is an enlarged top view of some components of a carousel according to the present invention, with parts removed for clarity;
Figure 2 is a top view of the carousel of Figure 1, with parts remove for clarity; and
Figure 3 is a frontal view in section of carousel of Figures 1 and, with parts removed for clarity.

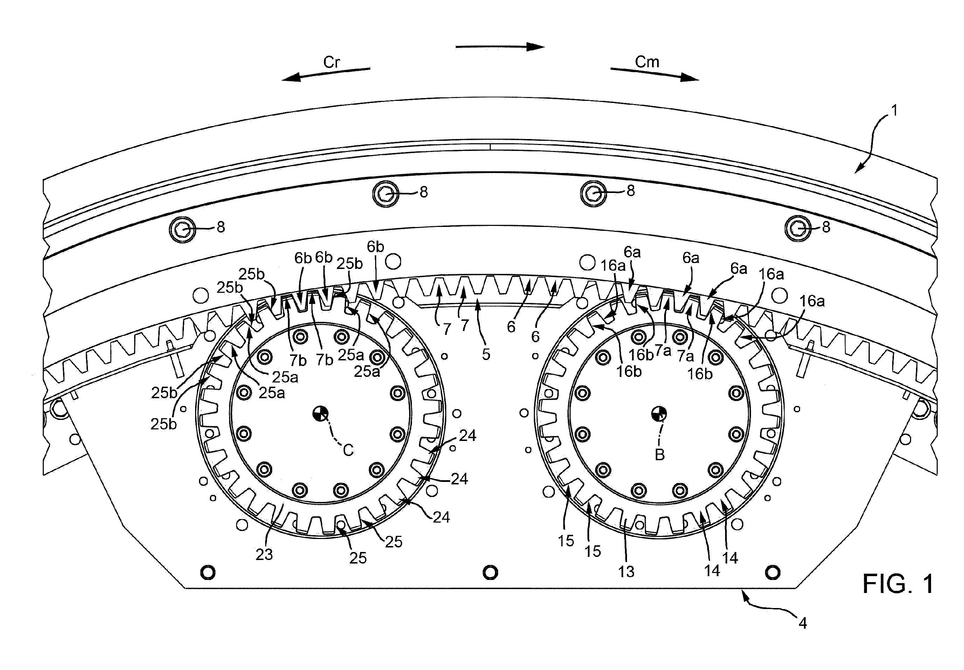

Number 1 in Figure 1 indicates as a whole a carousel for an article-handling machine 2, which is adapted to carry-out one operation on a plurality of articles (not-shown) filled with a pourable product, especially a pourable food product.

Non limitative examples of the article-handling machine 2 are a filling machine for filling articles with the pourable product, a labelling machine for applying a plurality of labels onto respective articles.

In particular, carousel 1 is a big size one, in particular with a diameter greater than 5 meters.

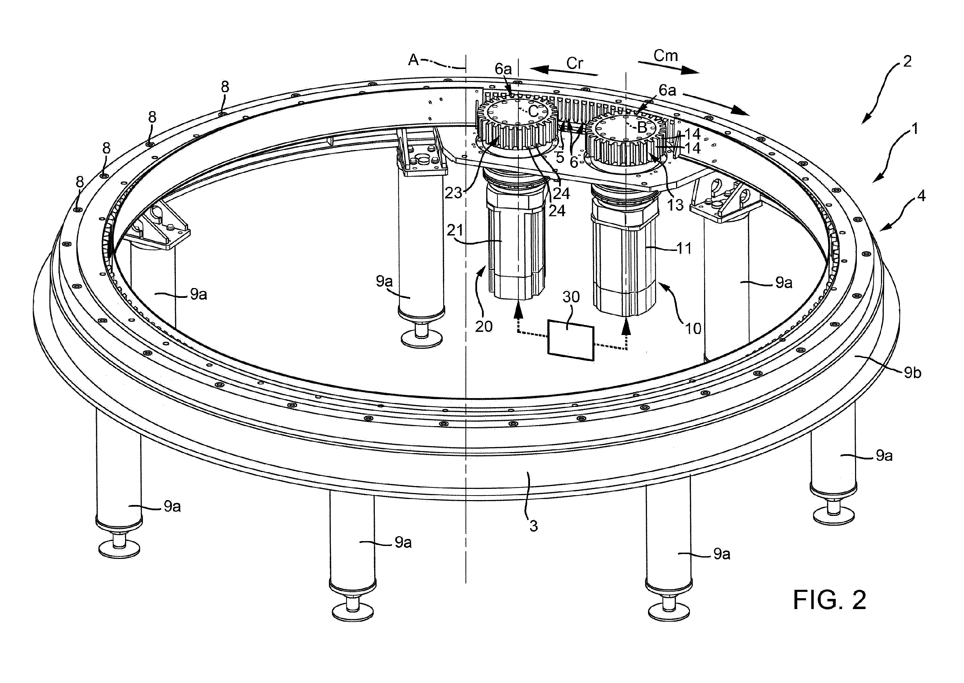

Carousel 1 comprises, in turn, (Figure 2):
- a stator 3; and
- a rotor 4, which is rotatable about an axis A with respect to stator 3 in a first direction (clockwise in Figures 1 to 3).

Axis A is vertical, in the embodiment shown.

Stator 3 comprises a plurality of angularly equi-spaced pedestals 9a and a ring 9b, which is supported by pedestals 9a and extends about axis A.

Rotor 4 is adapted to drive in rotation about axis A and comprises a plurality of not-shown operative heads, which are adapted to carry out the operation on relative articles.

The operative heads can be, for example, filling valves or labelling heads.

The operative heads are angularly equi-spaced around to axis A.

Rotor 4 substantially comprises a geared wheel 5 shaped as a ring about axis A and rotatably resting on ring 9b.

Wheel 5 comprises, on its side facing axis A, a plurality of alternate teeth 6, 6a, 6b and vanes 7, 7a, 7b.

Wheel 5 further comprises a plurality of angularly equi-spaced holes 8, which extend parallel to and about axis A and are angularly equi-spaced about axis A.

Carousel 1 further comprises a motor 10, which is adapted to exert a torque Cm on wheel 5 and, therefore on rotor 4.

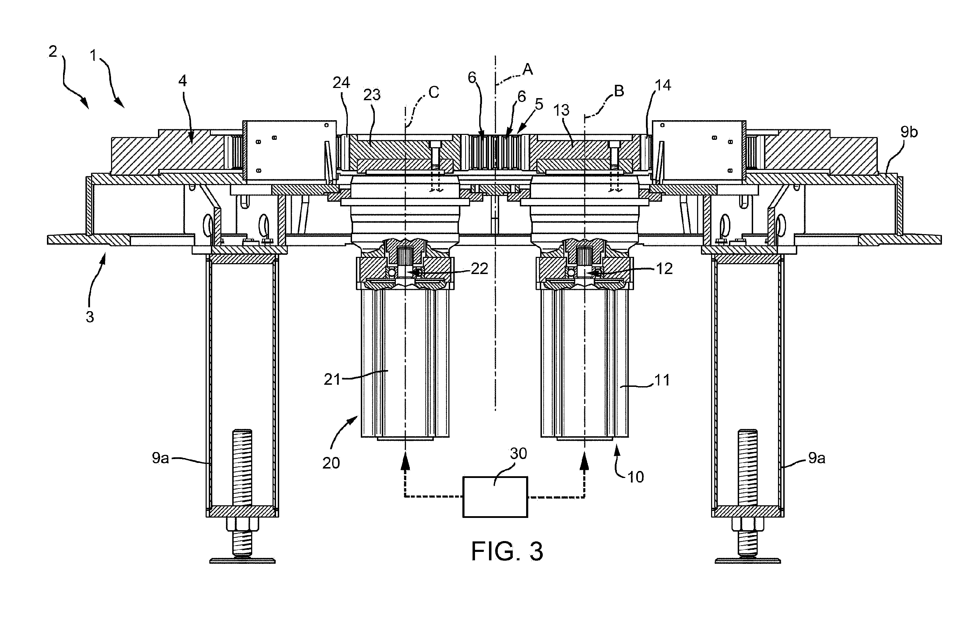

Motor 10 substantially comprises:
- a housing 11, which is stationary about axis A;
- a shaft 12 (shown in Figure 3 only), which is rotatable about an axis B and protrudes from housing 11; and
- a gear 13, which is fitted to shaft 12 and is driven in rotation about axis B by shaft 12.

Gear 12 comprises a plurality of alternate teeth 14 and vanes 15.

Each tooth 14 is bounded (Figure 1) by a pair of flanks 16a, 16b. Flank 16a is arranged upstream of flank 16b, proceeding according to the first direction.

Teeth 14 meshes with teeth 6a of wheel 5 and are housed inside vanes 7a of wheel 5.

Axis B is in the embodiment shown, parallel to axis A and is interposed between axis A and wheel 5.

Gear 13 is housed inside wheel 5 and has a diameter smaller than wheel 5.

Advantageously, carousel 1 comprises a motor 20, which is operated independently of motor 10, is operatively connected to wheel 5 and is controlled to exert a torque Cr on wheel 5.

As a result, wheel 5 is subjected both to torque Cm exerted by motor 10 and to torque Cr exerted by motor 20.

Motor 20 substantially comprises:
- a housing 21, which is stationary about axis A;
- a shaft 22 (shown in Figure 3 only), which is rotatable about an axis C and protrudes from housing 21; and
- a gear 23, which is fitted to shaft 22 and is driven in rotation about axis C by shaft 22.

Gear 23 comprises a plurality of alternate teeth 24 and vanes 25.

Teeth 24 mesh with teeth 6b of wheel 5 and are housed within vanes 7b of wheel 5.

Each tooth 24 is bounded (Figure 1) by a pair of flanks 26a, 26b. Flank 26a is arranged upstream of flank 16b, proceeding according to the first direction around axis A.

Axis C is, in the embodiment shown, parallel to axes A, B, and interposed between axis A and wheel 5.

Axes B, C are, in the embodiment shown, arranged at the same radial distance from axis A.

Carousel 1 further comprises a control unit 30, which is functionally connected with motors 10, 20 and i programmed for controlling torque Cm and torque Cr exerted by motors 10, 20.

In greater detail, control unit 30 is programmed for controlling torque Cf exerted by motor 20 on the basis of torque Cm exerted by motor 10.

In other words, motor 20 acts as a "master" motor while motor 10 acts as a "slave motor".

In greater detail, control unit 30 is programmed for keeping constant a difference D between torque Cm exerted by motor 10 and torque Cf exerted by motor 20.

Still more precisely, control unit 30 is programmed for causing motor 10 to exert torque Cm in the first direction and motor 20 to exert torque Cr on rotor 4 and about axis A in a second direction (anticlockwise in Figures 1 to 3) opposite to the first direction, in a normal operation of carousel 1.

During this normal operation, motor 10 exerts an accelerating torque Cm on rotor 4 whereas motor 20 exerts a braking torque Cf on rotor 4.

Accelerating torque Cm equals, in this case, the sum of the torque necessary to rotate rotor 4 about axis A and braking torque Cf.

Control unit 30 is also programmed for causing motor 10 to exert torque Cm in the first direction (clockwise in Figures 1 to 3) and motor 20 to exert torque Cr in the first direction, when a fast acceleration of carousel 1 rotating in the first direction is required.

In this case, rotor 4 rotates in the first direction (clockwise in Figures 1 to 3) and is subjected to the sum of accelerating torques Cm and Cf directed in the same first direction.

Control unit 30 is also programmed for causing motor 10 to exert torque Cm in the second direction (anticlockwise in Figures 1 to 3) and motor 20 to exert torque Cr in the second direction, when a fast deceleration of carousel 1 rotating in the first direction is required.

In this case, rotor 4 rotates in the first direction and is subjected to the sum of braking torques Cm and Cf directed in the second direction.

Motors 10, 20 are, in the embodiment shown, electric motors, in particular brushless electric motors.

Thanks to the presence of independently driven motor 10, 20 and to the fact that a constant difference D is kept between torques Cm and Cf, simultaneously at least one tooth 14 of gear 12 meshes with a tooth 6a of wheel 5 and at least one tooth 24 of gear 23 meshes with a corresponding tooth 6b of wheel 5.

In particular (Figure 1), upstream (with reference to the advancing direction of rotor 4 about axis A, i.e. to the first direction, which is clockwise in Figures 1 to 3) flank 16a of at least one tooth 14 contacts downstream flank of relative tooth 6a of wheel 5, and downstream flank 26b of at least one tooth 24 contacts downstream flank of relative tooth 6b of wheel 5.

In use, rotor 4 of carousel 1 rotates in the first direction parallel to axis A and motors 10, 20 are operated so as to exert torques Cm, Cf respectively on wheel 5.

In the meanwhile, wheel 5 drives in rotation about axis A the operative heads, which carry out the operation on the not-shown relative articles.

Control unit 30 controls torque Cf exerted by motor 20 on the basis of torque Cm exerted by motor 10.

In the embodiment shown, control unit 30 controls motors 10 and 20 so as to keep constant difference D between torque Cm and torque Cf.

During a normal operation, control unit 30 controls motor 10 in such a way that it exerts accelerating torque Cm in the first direction (clockwise in Figures 1 to 3) on wheel 5 and motor 20 in such a way that it exerts braking torque Cf in the second direction (anticlockwise in Figures 1 to 3).

In case a fast acceleration of rotor 4 is required, control unit 30 causes motor 10 to exert accelerating torque Cm in the first direction and motor 20 to exert accelerating torque Cr in the same first direction clockwise in Figures 1 to 3).

Accordingly, both torques Cm and Cf accelerate rotor 4 in the first direction clockwise in Figures 1 to 3).

In case a fast acceleration of rotor 4 is required, control unit 30 causes motor 10 to exert accelerating torque Cm in the first direction and motor 20 to exert accelerating torque Cr in the same first direction.

In case a fast deceleration of rotor 4 is required, control unit 30 causes motor 10 to exert braking torque Cm in the second direction and motor 20 to exert braking torque Cr in the same second direction.

Accordingly, both torques Cm and Cf brake rotor 4 travelling in the first direction.

In all the cases, being torque Cm greater than torque Cf for difference D, upstream flank 16a of at least one tooth 14 contacts a relative downstream flank of corresponding tooth 6a, while downstream flank 26b of at least one tooth 24 contacts downstream flank of corresponding tooth 6b, proceeding according to the advancing direction of rotor 4 about axis A, i.e. the first direction (clockwise in Figures 1 to 3).

Accordingly, simultaneously at least one tooth 14 meshes with relative tooth 6a and at least one tooth 24 meshes with relative tooth 6b.

Furthermore, the gaps between teeth 14, 24 and relative teeth 6a, 6b with which they mesh are contained.

From an analysis of the features of carousel 1 and of the method made according to the present invention, the advantages it allows to obtain are apparent.

In particular, motors 10, 20 are driven independently of one another and apply respective torques Cm, Cf on rotor 4.

Accordingly, motors 10, 20 can be controlled by control unit 30 in such a way to obtain different movement law of rotor 4 of carousel 1.

In particular, control unit 30 is programmed for causing motors 10, 20 respectively to:
- exert accelerating torque Cm in the first direction and braking torque Cf in the second direction, in a normal operation of carousel 1; and/or
- exert both torques Cm, Cf in the same first direction, when an increased acceleration of rotor 4 is required in the said first direction; and/or
- exert both torque Cm and torque Cf in the second direction, when an increased deceleration of rotor 4 is required parallel to said second direction.

As a result, the movement of rotor 4 can be controlled with a greater flexibility and in a wider range of operative conditions, when compared with the known solution described in the introductory part of the present description.

Furthermore, the movement of rotor 4 is substantially in no way affected by the wear effects typical of the known solution described in the introductory part of the present description.

Accordingly, rotor 4 rotates about axis A in more a regular and repeatable way than in the introductory part of the present description.

Finally, the value of torque Cf is determined on the basis of the value of torque Cm by control unit 30.

Still more precisely, control unit 30 is programmed to keep constant difference D between torque Cm and torque Cr.

In this respect, the Applicant has found that being difference D constant, upstream flank 16a of at least one tooth 14 contacts a relative downstream flank of corresponding tooth 6a, while downstream flank 26b of at least one tooth 24 contacts downstream flank of corresponding tooth 6b, proceeding according to the first direction about axis A.

As a result, simultaneously at least one tooth 14 meshes with relative tooth 6a and at least one tooth 24 meshes with relative tooth 6b.

Due to the presence of at least a pair of teeth 14, 6a and at least a pair of teeth 24, 6b simultaneously in contact, it is possible to achieve a higher regularity and precision of the rotating movement of rotor 4 of carousel 1, when compared with the known solution described in the introductory part of the present description.

Finally, it is apparent that modifications and variants not departing from the scope of protection of the claims may be made to carousel 1 and to the method according to the invention.

In particular, difference D between torques Cm, Cr could not be constant and/or torque Cr can be controlled independently of torque Cm.

Also in these cases, control unit 30 is programmed for causing motors 10, 20 respectively to:
- exert accelerating torque Cm in the first direction and braking torque Cf in the second direction, in a normal operation of carousel 1; and/or
- exert both torques Cm, Cf in the same first direction, when an increased acceleration of rotor 4 is required in the first direction; and/or
- exert both torque Cm and torque Cf in said second direction, when an increased deceleration of rotor 4 is required in the second direction.

## Claims

1. A carousel (1) for an article-handling machine (2), comprising:
- a stator (3);
- a rotor (4) rotatable with respect to said stator (3) in a first direction and adapted to be operatively connected to a plurality of operative heads for carrying out an operation on respective articles; and
- a first motor (10), which is operatively connected to said rotor (4) and is controllable for exerting a first torque (Cm) on said rotor (4);
**characterized by** comprising a second motor (20), which is drivable independently of said first motor (10), is operatively connected to said rotor (4), and is controllable for exerting on said rotor (4) a second torque (Cf).

2. The carousel of claim 1, **characterized by** comprising control unit (30), which is programmed for causing said first motor (10) and said second motor (20) to exert respectively said first torque (Cm) and said second torque (Cr).

3. The carousel of claim 2, **characterized in that** said control unit (30) is programmed for determining said second torque (Cf) on the basis of said first torque (Cm).

4. The carousel of claim 2 or 3, **characterized in that** said control unit (30) is programmed for keeping constant the value of a difference (D) between said first torque (Cm) and said second torque (Cr).

5. The carousel of any one of the foregoing claims, **characterized in that** said control unit (30) is configured for causing said first motor (10) and second motor (20) respectively to:
- exert said first torque (Cm) in said first direction and said second torque (Cf) in a second direction, opposite to said first direction, in a normal operation of said carousel; and/or
- exert both said first torque (Cm) and said second torque (Cf) in said first direction, when an increased acceleration of said rotor (4) is required parallel to said first direction; and/or
- exert both said first torque (Cm) and said second torque (Cf) in said second direction, when an increased deceleration of said rotor (4) is required parallel to said second direction.

6. The carousel of any one of the foregoing claims, **characterized in that** said first motor (10) and/or said second motor (20) is an electric motor, preferably a brushless electric motor.

7. The carousel of any one of the foregoing claims, **characterized by** comprising a first gear (13), which is drivable in rotation by said first motor (10) and meshes with a second gear (5) carried by said rotor (4).

8. The carousel of any one of the foregoing claims, **characterized by** comprising a third gear (23), which is drivable in rotation by said second motor (20) and meshes with said second gear (5).

9. The carousel of claim 6 to 8, **characterized in that** said first gear (13), second gear (5) and third gear (23) comprise respective plurality of first teeth (14), second teeth (6, 6a, 6b) and third teeth (24);
at least one first tooth (14) meshing with a corresponding one of second teeth (6a) and simultaneously at least one third tooth (24) meshing with a corresponding another one of second tooth (6b).

10. The carousel of claim 9, **characterized in that** said first tooth (14) comprises a first upstream flank (16a) and a first downstream flank (16b), proceeding according to the first direction;
said third tooth (24) comprising a second upstream flank (26a) and a second downstream flank (26b), proceeding according to the first direction;
said first upstream flank (16a) contacting said one corresponding second tooth (6a);
said second downstream flank (26b) contacting said corresponding another relative second tooth (6b).

11. An article-handling machine (2), comprising:
- a carousel (1) according to any one of the foregoing claims; and
- a plurality of operative heads operatively connected to said rotor (4) and operable to carry out an operation on a plurality of respective articles.

12. A method of driving in rotation a carousel (1) for an article-handling machine (2) in a first direction, comprising the steps of:
i) exerting a first torque (Cm) on a rotor (4) of said carousel (1) by using a first motor (10) which is operatively connected to said rotor (4);
**characterized by** comprising the steps of:
ii) exerting a second torque (Cr) on said rotor (4) of said carousel (1) by using a second motor (20), which is operatively connected to said rotor (4); and
iii) driving said second motor (20) independently of said first motor (10).

13. The method of claim 12, **characterized by** comprising the step iv) of determining said second torque (Cr) on the basis of said first torque (Cm).

14. The method of claim 12 or 13, **characterized by** comprising the step v) of keeping constant the value of a difference (D) between said first torque (Cm) and said second torque (Cr).

15. The method of any one of claims 12 to 14, **characterized by** comprising the steps of:
vi) exerting said first torque (Cm) in said first direction and said second torque (Cf) in a second direction, opposite to said first direction, in a normal operation of said carousel; and/or
vii) exerting both said first torque (Cm) and said second torque (Cf) in said first direction, when an increased acceleration of said rotor (4) is required parallel to said first direction; and/or
viii) exerting both said first torque (Cm) and said second torque (Cf) in said second direction, when an increased deceleration of said rotor (4) is required parallel to said second direction.
